# EUROPEAN PATENT SPECIFICATION

(11) **EP 1 878 624 B1**
(45) Date of publication and mention of the grant of the patent: **09.09.2009**
(21) Application number: 07013076.0
(22) Date of filing: 04.07.2007
(51) Int. Cl.: B60R 19/48, B60R 21/013, B60Q 1/48, G01D 11/30, G01S 7/521, G01S 15/93, G10K 11/00, H02B 1/048

(54) **Device for detecting objects near vehicles**
Vorrichtung zur Detektion von Objekten in der Nähe von Fahrzeugen
Dispositif de détection d'objets à proximité de véhicules

(30) Priority: 11.07.2006 IT MO20060225
(43) Date of publication of application: 16.01.2008
(73) Proprietor: Meta System S.p.A., 42100 Reggio Emilia (IT)
(72) Inventor: Simonazzi, Giuseppe, 42100 Reggio Emilia (IT)
(74) Representative: Brogi, Graziano

(56) References cited:
- EP-A1- 1 083 099
- EP-A1- 1 555 163
- DE-A1- 10 314 862

## Description

The present invention refers to a device for detecting objects near vehicles, particularly for applications in parking aid, or the like.

With particular reference to parking aid applications, equipping motor vehicles or the like is known with systems suitable for controlling and indicating to the driver the presence and/or the relative distance of objects near the motor vehicle during parking manoeuvres or, also, suitable for calculating and indicating the room available during such manoeuvre.

Such systems substantially permit carrying out manoeuvres in total safety, avoiding (or at least limiting) the danger of accidental collisions with external bodies, including in low-visibility conditions.

The known systems generally have a plurality of detection sensors of the type, for example, of ultrasonic sensors, able to send a signal (for example, of the ultrasonic type) and to detect any echo signals reflected off one or more objects.

The detection sensors are commonly distributed at the front and/or rear bumpers, which are the parts of the motor vehicle most exposed to the risk of collision with external bodies, and are fastened to suitably-shaped supports, of the bracket, appendix type or the like, connected in a removable or non-removable way to the bumper.

The detection sensors are connected electrically by means of power leads to a processing and control unit such as, for example, a conventional power unit for cars, to which they send a transduced electrical signal starting with the echo signals detected. Subsequent processing of the transduced electrical signal permits, for example, defining the relative distance of the objects detected.

The management and control unit is associated with visual and/or sound interfacing means of the type, for example, of a display screen placed on the dashboard of the motor vehicle, suitable for indicating to the driver the presence of the obstacle, the relative position of the obstacle or information of other type.

The known sensors are generally made up of a capsule comprising, inside, a transducer element of the type, for example, of a piezoelectric transducer suitable for converting an electric signal into a respective ultrasonic signal and vice versa.

The capsule comprises a portion of surface suitable for transmitting and receiving ultrasonic signals, arranged facing outwards through an opening made in the bumper, and an opposite portion having an electronic connection element and facing towards the inside of the vehicle to make wiring operations easier.

The connection element is of the type, for example, of a pair of metal terminals or, alternatively, of a pair of wires having a connection socket and can be connected to the management and control unit by means of the leads and by placing a suitable connector in between. The connector comprises internal electronics having an input that can be electrically connected to the connection element of the device, and an output that can be electrically connected to the lead associated with the management and control unit.

The fitting phase of the detection sensors to the bumper, in particular, requires a first operation involving the fitting of the sensors themselves to the supports, then a second wiring operation in which the connector is operatively associated with the electronic connection element of the sensor, and in which such connector is subsequently connected to the management and control unit by means of the specific wire.

These known detection sensors are not however without drawbacks, among which the fact is underlined that the above fitting operations, and in particular the electronic connection, are rather complicated, requiring a first phase of connection of each sensor to its respective electronic connector, and a subsequent phase of connection of the electronic connectors to the respective wires associated with the management and control unit, with consequent fairly long work execution times.

It is further emphasised that the execution times for such fitting operations are also long in consideration of the fact that the parking aid, anti break-in systems or the like generally envisage numerous detection sensors, each of which requires fitting on its corresponding support with subsequent electrical connection.

The presence of intermediate electrical components such as connectors further increases the possibilities of finding defects or faults on the system.

Not the last disadvantage consists in the overall dimensions resulting from the presence of the connector, usually fastened on the inner part of the bumper, which can make connection operations between the sensor and the management and control unit less easy.

From patent document DE 103 14 862 A1 a sensor arrangement of a parking aid is known including a holding device associated with the bodywork of a vehicle and suitable for housing a sensor, wherein engaging mechanisms and plug-in connections are provided on the holding device and the sensor in order to fasten the sensor when housed within the holding device, in a final assembly configuration, the document showing the features of the preamble of claim 1.

However even this sensor arrangement appears to be not exempt from the drawbacks above outlined.

The main aim of the present invention is to eliminate the drawbacks of prior art complained of above and provide a device for detecting objects, particularly for applications on vehicles in parking aid, anti-break in systems or the like, that allows simplifying fitting operations and subsequent connection to the management and control unit, considerably cutting the times of execution.

As part of this technical aim, another object of the present invention is to reduce the possibilities of malfunctions of the system due to faults or defects of its component parts.

A further object of the invention is to reduce the overall dimensions due to the device and to the other system components.

Another object of the invention is to cater for the above aims with a simple structure, of relatively practical implementation, safe to use and with effective operation, as well as having a relatively low cost.

The above-mentioned objects are all achieved by the present device for detecting objects near vehicles, particularly for applications in parking aid, anti-break in systems or the like, having the features recited by the main independent claim 1.

Further characteristics and advantages of the present invention will appear even more evident from the detailed description of a referred, but not exclusive, embodiment of a device for detecting objects near vehicles, particularly for applications in parking aid, anti-break in systems or the like, illustrated indicatively by way of non limiting example, in the attached drawings wherein:

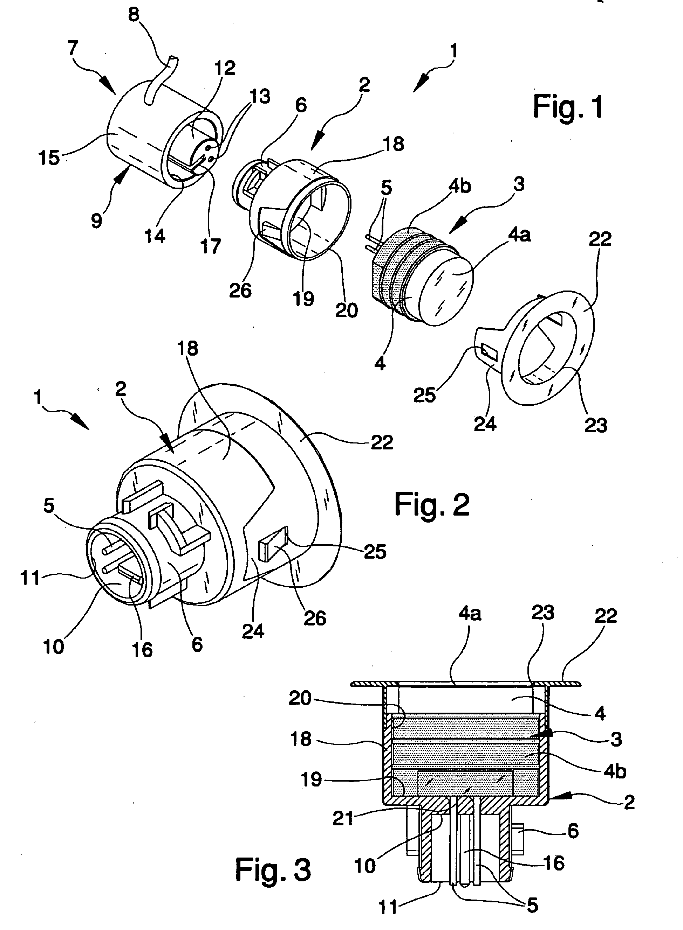

the figure 1 is an exploded view of the device according to the invention;
the figure 2 is a perspective view of the device according to the invention;
the figure 3 is a view of a partial section of the device according to the invention.

With special reference to such figures, a device for detecting objects near vehicles which can be used, for example, in parking aid systems or in anti-break in systems, has been globally designated by reference number 1.

The device 1 comprises a support 2 associable with the bodywork of a vehicle and with which is associated, in an assembly configuration, a sensor 3 suitable for detecting at least one object near the vehicle.

The sensor 3 can be of the type of an ultrasonic sensor of known type comprising a body 4 containing a transducer element, of the type, for example, of a piezoelectric transducer suitable for converting an electric signal into a respective ultrasonic signal and vice versa.

The body 4 is substantially cylindrical and has an emission/detection surface 4a substantially flat and suitable for transmitting an ultrasonic signal and/or for receiving a signal reflected by one or more objects near the vehicle.

The sensor 3 also comprises a pair of metal terminals 5 electronically associated with the transducer and defined protruding from a surface of the body 4 substantially opposite the emission/detection surface 4a.

With reference to the use of the device 1 in parking-aid systems, the support 2 can be fixed to the front bumper and/or the rear bumper of a motor vehicle, with the emission/detection surface 4a of the sensor 3 arranged facing outwards through an opening obtained on the bumper and with the metal terminals 5 that extend inwards.

The support 2 includes connection means 6 which, in the above assembly configuration, are associated in a removable way with electronic transmission means 7 connected to a processing and control unit on the vehicle.

Advantageously, in this assembly configuration, the electronic transmission means 7 are electronically and directly associated with the terminals 5 of the sensor 3.

In particular, the electronic transmission means 7 comprise a lead 8 which is associated on the one end with the processing and control unit, made up of a unit on the vehicle, and which has a connector 9 on the opposite end.

The unit, which is not shown in the above illustrations because it is of the known type, can be associated with interfacing means of the visual or sound type made up, for example, of a display inside the motor vehicle compartment, and suitable for indicating to the driver the presence of an obstacle, the relative position of the obstacle, or information of other type.

The connection means 6 are made up of a protruding first portion of the support 2 associable in a removable way and by interlocking with the connector 9 for electronically connecting the terminals 5 and the lead 8.

In particular, the first portion 6 has a substantially cylindrical shape and inside it is defined a seat 10 for housing the metal terminals 5.

The first portion 6 also comprises a first opening 11 substantially round in shape and the metal terminals 5 extend from the bottom of the seat 10 towards such first opening 11.

The connector 9 comprises a protruding appendix 12 substantially cylindrical in shape that can be fitted to measure inside the seat 10 through the first opening 11 and which has a pair of connecting holes 13 suitable for housing the metal terminals 5 in the assembly configuration.

Advantageously, in the assembly configuration, the side wall of the first portion 6 can be at least partially fitted inside a ring-shaped housing 14 defined between the outer surface of the protruding appendix 12 and a portion of the outer wrapping 15 of the connector 9.

Usefully, the first portion 2 comprises locking means 16 for locking the relative rotation between the first portion 6 and the connector 9, once these have been coupled together.

In particular, the locking means 16 are made up of a plate-shaped element defined longitudinally from the bottom of the seat 10 towards the first opening 11 and which can be fitted, in the assembly configuration, in a respective crevice 17 defined on the protruding appendix 12.

Different conformations of the first portion 6 and of the connector 9 and different types of coupling between these cannot however be ruled out.

The support 2 comprises a second portion 18 substantially cylindrical and hollow, inside which is defined a cavity 19 for containing the body 4 of the sensor 3.

The second portion 18 has a second opening 20 from which appears the emission/detection surface 4a of the sensor 3.

A pair of through holes 21 are defined from the bottom of the cavity 19 to the bottom of the seat 10, inside which the metal terminals 5 are inserted.

Usefully, the sensor 3 can comprise an elastic seal 4b defined on the side surface of the body 4 and suitable for engaging in the inner surface of the cavity 19, in the assembly configuration, for better grip between the sensor 3 and the support 2.

Advantageously, the device 1 can have a plate 22 covering the support 2 which can be associated with this in a removable way, for example by placing in between fixing means, of the snap, threaded type or the like, or in a non-removable way, by means of gluing, welding operations, etc.

The plate 22 has a third round and through opening 23, suitable for being positioned substantially aligned with the second opening 20 to allow, in the assembly configuration, fitting at least one portion of the body 4 protruding from the support 2 with the emission/detection surface 4a arranged facing outwards.

Anchoring means of the snap type are provided for anchoring the plate 22 to the support 2 which comprise a pair of elastic fins 24 that extend substantially at right angles to the plate 22 and which have a respective slot 25 suitable for being engaged by a corresponding retention tooth 26 defined on the side surface of the support 2.

It has in point of fact been found how the described invention achieves the proposed objects and in particular the fact is underlined that the presence directly on the support of the connection means to the electronic transmission means permits considerably simplifying the operations of fitting and connecting to the unit, thereby considerably cutting execution times.

The absence of intermediate electronic component parts placed in between the sensor and the electronic transmission means, furthermore, reduces the chance of malfunctions due to faults or to defects and also considerably reduces the overall dimensions of each single device.

The invention thus conceived is susceptible of numerous modifications and variations, all of which falling within the scope of the inventive concept.

## Claims

1. Device (1) for detecting objects near vehicles, particularly for applications in parking aid, comprising at least one support (2) associable with the bodywork of a vehicle, and at least one sensor (3) associable with said support (2), suitable for detecting at least one object near said vehicle and associable electronically with at least one processing and control unit of said vehicle by interposition of electronic transmission means (7), wherein said support (2) comprises connection means (6) to said electronic transmission means (7) in an assembly configuration in which said electronic transmission means (7) are associated electronically and directly with at least one pair of metal terminals (5) of said sensor (3), whereby
said connection means comprises at least one protruding first portion (6) of said support (2) associable in a removable way with at least one complementary connector (9) on said electronic transmission means (7), **characterized in that** said protruding first portion (6) of said support (2) comprises at least one first opening (11) for fitting at least one portion of said connector (9).

2. Device according to claim 1, **characterized in that** said protruding first portion (6) of said support (2) is associable with said connector (9) by interlocking.

3. Device according to claims 1 or 2, **characterized in that** said first portion (6) comprises at least one seat (10) for housing said metal terminals (5).

4. Device according to claim 3, **characterized in that** said terminals (5) extend from the bottom of said seat (10) towards said first opening (11).

5. Device according to anyone of the preceding claims **characterized in that** in said assembly configuration said terminals (5) are fitted inside respective connecting holes (13) on said connector (9).

6. Device according to claim 5, as dependent on claims 3 or 4, **characterized in that** said connector (9) comprises at least one protruding appendix (12) that can be fitted to measure inside said seat (10) through said first opening (11) and which has said connecting holes (13).

7. Device according to claim 6, **characterized in that** said protruding appendix (12) is substantially cylindrical.

8. Device according to anyone of the preceding claims **characterized in that** said first portion (6) of said support (2) has a substantially cylindrical hollow conformation.

9. Device according to anyone of the preceding claims **characterized in that** it comprises locking means (16) for locking the relative rotation between said first portion (6) of said support (2) and said connector (9) in said assembly configuration.

10. Device according to claim 9, as dependent on claim 3, **characterized in that** said locking means comprise at least one plate shaped element (16) defined longitudinally from the bottom of said seat (10) towards said first opening (11) and which can be fitted, in said assembly configuration, in a respective crevice (17) on said connector (9).

11. Device according to anyone of the preceding claims **characterized in that** the side wall of said first portion (6) can be at least partially fitted inside a respective ring-shaped housing (14) on said connector (9).

12. Device according to claim 11, as dependent on claim 6, **characterized in that** said ring-shaped housing (14) is defined between the outer surface of said protruding appendix (12) and at least one portion of the outer wrapping (15) of said connector (9).

13. Device according to anyone of the preceding claims **characterized in that** said support (2) comprises at least a second portion (18) having a containing cavity (19) for containing at least in part the body (4) of said sensor (3).

14. Device according to claim 13, **characterized in that** said second portion (18) of said support (2) comprises at least a one second opening (20), said body (4) of the sensor (3) having at least one emission/detection surface (4a) arranged facing from said second opening (20) and suitable for transmitting an emitted signal and/or for receiving a signal reflected by said object.

15. Device according to claim 14, **characterized in that** said emission/detection surface (4a) extends on a portion of the outer surface of said body (4) of the sensor (3).

16. Device according to claims 14 or 15, **characterized in that** said emission/detection surface (4a) is substantially flat.

17. Device according to claim 13, as dependent on claim 3, **characterized in that** said support (2) comprises at least a through hole (21) between said containing cavity (19) of said second portion (18) and said seat (10) of said first portion (6) of said support (2), said through hole (21) being suitable for fitting said metal terminals (5) in said assembly configuration.

18. Device according to anyone of claims 13 to 17, **characterized in that** it comprises an elastic seal (4b) placed in between the inner surface of said containing cavity (19) and the outer surface of said body (4) of the sensor (3).

19. Device according to anyone of claims 14 to 16, **characterized in that** it comprises a plate (22) associable with said support (2) and having a third opening (23) which can be positioned substantially aligned with said second opening (20) of the second portion (18) of said support (2), in said assembly configuration.

20. Device according to claim 19, **characterized in that** said plate (22) is associable with said support (2) by placing in between anchoring means (24, 25, 26) of the snap type.

21. Device according to claim 20, **characterized in that** said anchoring means comprise at least a pair of elastic fins (24) defined protruding along a direction substantially at right angles to said plate (22).

22. Device according to claim 21, **characterized in that** said elastic fins (24) comprise at least one respective slot (25) suitable for being engaged by a corresponding retention tooth (26) defined protruding from the side surface of said support (2).

23. Device according to anyone of the preceding claims **characterized in that** said sensor (3) is of an ultrasonic sensor type.

24. Device according to anyone of the preceding claims **characterized in that** said electronic transmission means (7) comprise at least one lead (8) associated at one end with said processing and control unit and having said connector (9) at the opposite end.

25. Device according to anyone of the preceding claims **characterized in that** said support (2) is associable with the bumper of said vehicle.

## Patentansprüche

1. Vorrichtung (1) zur Detektion von Objekten in der Nähe von Fahrzeugen, besonders für Anwendungen zur Einparkhilfe, aufweisend mindestens eine Halterung (2), die mit der Karosserie eines Fahrzeugs verbindbar ist, und mindestens einen Sensor (3), der mit der Halterung (2) verbindbar ist, die für das Detektieren mindestens eines Objekts in der Nähe des Fahrzeugs geeignet und durch zwischenschaltung einer elektronischen Sendeeinrichtung (7) mit mindestens einer Verarbeitungs- und Steuereinheit des Fahrzeugs verbindbar ist, bei der die Halterung (2) eine Einrichtung (6) zur Verbindung mit der elektronischen Sendeeinrichtung (7) in einer Montagekonfiguration aufweist, in der die elektronische Sendeeinrichtung (7) elektronisch und direkt mit mindestens einem Paar Metallklemmen (5) des Sensors (3) verbunden ist, wodurch die Verbindungseinrichtung mindestens einen vorspringenden ersten Teil (6) der Halterung (2) aufweist, der entfernbar mit mindestens einem komplementären Verbindungsstück (9) auf der elektronischen Sendeeinrichtung (7) verbindbar ist, **dadurch gekennzeichnet, dass** der vorspringende erste Teil (6) der Halterung (2) mindestens eine erste Öffnung (11) zum Einstecken mindestens eines Teils des Verbindungsstücks (9) aufweist.

2. Vorrichtung gemäß Anspruch 1, **dadurch gekennzeichnet, dass** der vorspringende erste Teil (6) der Halterung (2) durch wechselseitige Verzahnung mit dem Verbindungsstück (9) verbindbar ist.

3. Vorrichtung gemäß Anspruch 1 oder 2, **dadurch gekennzeichnet, dass** der erste Teil (6) mindestens einen Sitz (10) zum Aufnehmen der Metallklemmen (5) aufweist.

4. Vorrichtung gemäß Anspruch 3, **dadurch gekennzeichnet, dass** die Klemmen (5) von der Unterseite des Sitzes (10) in Richtung der ersten Öffnung (11) verlaufen.

5. Vorrichtung gemäß irgendeinem der vorangegangenen Ansprüche, **dadurch gekennzeichnet, dass** in der Montagekonfiguration die Klemmen (5) innerhalb entsprechender Verbindungslöcher (13) im Verbindungsstück (9) eingesteckt werden.

6. Vorrichtung gemäß Anspruch 5 als Unteranspruch zu Anspruch 3 oder 4, **dadurch gekennzeichnet, dass** das Verbindungsstück (9) mindestens einen vorspringenden Fortsatz (12) aufweist, der durch die erste öffnung (11) in den Sitz (10) eingepasst werden kann und die Verbindungslöcher (13) aufweist.

7. Vorrichtung gemäß Anspruch 6, **dadurch gekennzeichnet, dass** der vorspringende Fortsatz (12) im Wesentlichen zylindrisch ist.

8. Vorrichtung gemäß irgendeinem der vorangegangenen Ansprüche, **dadurch gekennzeichnet, dass** der erste Teil (6) der Halterung (2) im Wesentlichen als hohler Zylinder ausgebildet ist.

9. Vorrichtung gemäß irgendeinem der vorangegangenen Ansprüche, **dadurch gekennzeichnet, dass** sie eine Sperreinrichtung (16) zum Verhindern der relativen Drehung zwischen dem ersten Teil (6) der Haltung (2) und dem Verbindungsstück (9) in der Montagekonfiguration aufweist.

10. Vorrichtung gemäß Anspruch 9 als Unteranspruch zu Anspruch 3, **dadurch gekennzeichnet, dass** die Sperreinrichtung mindestens ein plattenförmiges Element (16) aufweist, das in Längsrichtung von der Unterseite des Sitzes (10) in Richtung der ersten Öffnung (11) definiert wird und in der Montagekonfiguration in einen entsprechenden Schlitz (17) im Verbindungsstück (9) eingesteckt werden kann.

11. Vorrichtung gemäß irgendeinem der vorangegangenen Ansprüche, **dadurch gekennzeichnet, dass** die Seitenwand des ersten Teils (6) mindestens teilsweise innerhalb eines entsprechenden ringförmigen Gehäuses (14) auf dem Verbindungsstück (9) eingesteckt werden kann.

12. Vorrichtung gemäß Anspruch 11 als Unteranspruch zu Anspruch 6, **dadurch gekennzeichnet, dass** das ringförmige Gehäuse (14) zwischen der äußeren Oberfläche des vorspringenden Fortsatzes (12) und mindestens einem Teil der äußeren Umfüllung (15) des Verbindungsstücks (9) definiert wird.

13. Vorrichtung gemäß irgendeinem der vorangegangenen Ansprüche, **dadurch gekennzeichnet, dass** die Halterung (2) mindestens einen zweiten Teil (18) mit einem aufnehmenden Hohlraum (19) zum Aufnehmen mindestens eines Teils des Körpers (4) des Sensors (3) aufweist.

14. Vorrichtung gemäß Anspruch 13, **dadurch gekennzeichnet, dass** der zweite Teil (18) der Halterung (2) mindestens eine zweite Öffnung (20) aufweist, wobei der Körper (4) des Sensors (3) mindestens eine Aussende-/Detektierfläche (4a) besitzt, die in einem Abstand vor der zweiten Öffnung (20) angeordnet ist und geeignet ist, ein ausgesendetes Signal zu senden und/oder ein vom Objekt reflektiertes Signal zu empfangen.

15. Vorrichtung gemäß Anspruch 14, **dadurch gekennzeichnet, dass** die Aussende-/Detektierfläche (4a) auf einem Teil der äußeren Oberfläche des Körpers (4) des Sensors (3) verläuft.

16. Vorrichtung gemäß Anspruch 14 oder 15, **dadurch gekennzeichnet, dass** die Aussende-/Detektierfläche (4a) im Wesentlichen flach ist.

17. Vorrichtung gemäß Anspruch 13 als Unteranspruch zu Anspruch 3, **dadurch gekennzeichnet, dass** die Halterung (2) mindestens ein Durchgangsloch (21) zwischen dem aufnehmenden Hohlraum (19) des zweiten Teils (18) und dem Sitz (10) des ersten Teils (6) der Halterung (2) aufweist, wobei das Durchgangsloch (21) für das Einstecken der Metallklemmen (5) in der Montagekonfiguration geeignet ist.

18. Vorrichtung gemäß irgendeinem der Ansprüche 13 bis 17, **dadurch gekennzeichnet, dass** sie eine elastische Dichtung (4b) aufweist, die zwischen der Innenfläche des aufnehmenden Hohlraums (19) und der Außenfläche des Körpers (4) des Sensors (3) angeordnet ist.

19. Vorrichtung gemäß irgendeinem der Ansprüche 14 bis 16, **dadurch gekennzeichnet, dass** sie eine Platte (22) aufweist, die mit der Halterung (2) verbindbar ist und eine dritte Öffnung (23) besitzt, die in der Montagekonfiguration im Wesentlichen zur zweiten Öffnung (20) des zweiten Teils (18) der Halterung (2) ausgerichtet positioniert werden kann.

20. Vorrichtung gemäß Anspruch 19, **dadurch gekennzeichnet, dass** die Platte (22) mit der Halterung (2) verbindbar ist, indem dazwischen Verankerungsvorrichtungen (24, 25, 26) in Schnappausführung angeordnet werden.

21. Vorrichtung gemäß Anspruch 20, **dadurch gekennzeichnet, dass** die Verankerungsvorrichtungen mindestens ein Paar elastischer Stege (24) aufweisen, die als Vorsprünge im Wesentlichen in rechten Winkeln zur Platte (22) definiert werden.

22. Vorrichtung gemäß Anspruch 21, **dadurch gekennzeichnet, dass** die elastischen Stege (24) mindestens einen entsprechenden Schlitz (25) aufweisen, der geeignet ist, von einem entsprechenden Haltezahn (26), der als Vorsprung von der Seitenfläche der Halterung (2) definiert wird, ergriffen zu werden.

23. Vorrichtung gemäß irgendeinem der vorangegangenen Ansprüche, **dadurch gekennzeichnet, dass** der Sensor (3) ein Sensor in Ultraschallausführung ist.

24. Vorrichtung gemäß irgendeinem der vorangegangenen Ansprüche, **dadurch gekennzeichnet, dass** die elektronische Sendeeinrichtung (7) mindestens eine Leitung (8) aufweist, die an einem Ende mit der Verarbeitungs- und Steuereinheit verbunden ist und am gegenüberliegenden Ende das Verbindungsstück (9) besitzt.

25. Vorrichtung gemäß irgendeinem der vorangegangenen Ansprüche, **dadurch gekennzeichnet, dass** die Halterung (2) mit dem Stoßfänger des Fahrzeugs verbindbar ist.

## Revendications

1. Dispositif (1) pour la détection d'objets proches de véhicules, en particulier destiné à des applications d'assistance au stationnement, comprenant au moins un support (2) pouvant être associé à la carrosserie d'un véhicule, et au moins un capteur (3) pouvant être associé audit support (2), apte à détecter au moins un objet proche dudit véhicule et pouvant être associé électroniquement à au moins une unité de traitement et de commande dudit véhicule par interposition de moyens de transmission électroniques (7), dans lequel ledit support (2) comprend des moyens de connexion (6) auxdits moyens de transmission électroniques (7) dans une configuration d'assemblage dans laquelle lesdits moyens de transmission électroniques (7) sont associés électroniquement et directement à au moins une paire de broches métalliques (5) dudit capteur (3), lesdits moyens de connexion comprenant au moins une première portion saillante (6) dudit support (2) pouvant être associée de manière amovible à au moins un connecteur complémentaire (9) sur lesdits moyens de transmission électroniques (7), ***caractérisé en ce que*** ladite première portion saillante (6) dudit support (2) comprend au moins une première ouverture (11) destinée à l'emboîtement d'au moins une partie dudit connecteur (9).

2. Dispositif selon la revendication 1, ***caractérisé en ce que*** ladite première portion saillante (6) dudit support (2) peut être associée audit connecteur (9) par verrouillage réciproque.

3. Dispositif selon les revendications 1 ou 2, ***caractérisé en ce que*** ladite première portion (6) comprend au moins un siège (10) pour accueillir lesdites broches métalliques (5).

4. Dispositif selon la revendication 3, ***caractérisé en ce que*** lesdites broches (5) s'étendent du fond dudit siège (10) en direction de ladite première ouverture (11).

5. Dispositif selon l'une quelconque des revendications précédentes, ***caractérisé en ce que****,* dans ladite configuration d'assemblage, lesdites broches (5) sont insérées dans des trous de connexion respectifs (13) ménagés sur ledit connecteur (9).

6. Dispositif selon la revendication 5 lorsqu'elle est dépendante des revendications 3 ou 4, ***caractérisé en ce que*** ledit connecteur (9) comprend au moins un appendice saillant (12) qui peut être ajusté à l'intérieur dudit siège (10) par ladite première ouverture (11) et qui possède lesdits trous de connexion (13).

7. Dispositif selon la revendication 6, ***caractérisé en ce que*** ledit appendice saillant (12) est sensiblement cylindrique.

8. Dispositif selon l'une quelconque des revendications précédentes, ***caractérisé en ce que*** ladite première portion (6) dudit support (2) est de conformation creuse sensiblement cylindrique.

9. Dispositif selon l'une quelconque des revendications précédentes, ***caractérisé en ce* qu'**il comprend des moyens de verrouillage (16) pour bloquer la rotation relative entre ladite première portion (6) dudit support (2) et ledit connecteur (2) dans ladite configuration d'assemblage.

10. Dispositif selon la revendication 9, lorsqu'elle est dépendante de la revendication *3, **caractérisé en ce que*** lesdits moyens de verrouillage comprennent au moins un élément (16) en forme de plaque, défini longitudinalement depuis le fond dudit siège (10) en direction de ladite première ouverture (11) et qui peut être inséré, dans ladite configuration d'assemblage, dans une fente respective (17) sur ledit connecteur (9).

11. Dispositif selon l'une quelconque des revendications précédentes, ***caractérisé en ce que*** la paroi latérale de ladite première portion (6) peut être, au moins partiellement, remboîtée à l'intérieur d'un logement de forme annulaire respectif (14) sur ledit connecteur (9).

12. Dispositif selon la revendication 11, lorsqu'elle est dépendante de la revendication *6, **caractérisé en ce que** ledit* logement de forme annulaire (14) est défini entre la surface extérieure dudit appendice saillant (12) et au moins une portion de l'enveloppe extérieure (15) dudit connecteur (9).

13. Dispositif selon l'une quelconque des revendications précédentes, ***caractérisé en ce que*** ledit support (2) comprend au moins une deuxième portion (18) ayant une cavité de rétention (19) destinée à contenir au moins en partie le corps (4) dudit capteur (3).

14. Dispositif selon la revendication 13, ***caractérisé en ce que*** ladite deuxième portion (18) dudit support (2) comprend au moins une deuxième ouverture (20), ledit corps (4) du capteur (3) ayant au moins une surface d'émission/détection (4a) placée frontalement à partir de ladite deuxième ouverture (20) et apte à transmettre un signal émis et/ou à recevoir un signal renvoyé par ledit objet.

15. Dispositif selon la revendication 14, ***caractérisé en ce que*** ladite surface d'émission/détection (4a) s'étend sur une portion de la surface extérieure dudit corps (4) du capteur (3).

16. Dispositif selon les revendications 14 ou 15, ***caractérisé en ce que*** ladite surface d'émission/détection (4a) est sensiblement plate.

17. Dispositif la revendication 13, lorsqu'elle est dépendante de la revendication *3, **caractérisé en ce que*** ledit support (2) comprend au moins un trou traversant (21) entre ladite cavité de rétention (19) de ladite deuxième portion (18) et ledit siège (10) de ladite première portion (6) dudit support (2), ledit trou traversant (21) étant apte à recevoir lesdites broches métalliques (5) dans ladite configuration d'assemblage.

18. Dispositif selon l'une quelconque des revendications 13 à 17, ***caractérisé en ce* qu'**il comprend un joint d'étanchéité élastique (4b) placé entre la surface intérieure de ladite cavité de rétention (19) et la surface extérieure dudit corps (4) du capteur (3).

19. Dispositif selon l'une quelconque des revendications 14 à 16, ***caractérisé en ce* qu'**il comprend une plaque (22) pouvant être associée audit support (2) et possédant une troisième ouverture (23) qui peut être positionnée sensiblement alignée avec ladite deuxième ouverture (20) de la deuxième portion (18) dudit support (2), dans ladite configuration d'assemblage.

20. Dispositif selon la revendication 19, ***caractérisé en ce que*** ladite plaque (22) peut être associée audit support (2) en plaçant entre eux des moyens d'ancrage (24, 25, 26) du type à encliquetage.

21. Dispositif selon la revendication 20, ***caractérisé en ce que*** lesdits moyens d'ancrage comprennent au moins une paire d'ailettes élastiques (24) faisant saillie dans une direction sensiblement à angles droits par rapport à ladite plaque (22).

22. Dispositif selon la revendication 21, ***caractérisé en ce que*** lesdites ailettes élastiques (24) comprennent au moins une fente respective (25) apte à être engagée par une dent de retenue correspondante (26) faisant saillie de la surface latérale dudit support (2).

23. Dispositif selon l'une quelconque des revendications précédentes, ***caractérisé en ce que*** ledit capteur (3) est du type capteur ultrasonore.

24. Dispositif selon l'une quelconque des revendications précédentes, ***caractérisé en ce que*** lesdits moyens de transmission électroniques (7) comprennent au moins un fil de raccordement (8) associé à une extrémité de ladite unité de traitement et de commande et ayant ledit connecteur (9) sur l'extrémité opposée.

25. Dispositif selon l'une quelconque des revendications précédentes, ***caractérisé en ce que*** ledit support (2) peut être associé au pare-choc dudit véhicule.
